(19)

Europäisches
Patentamt
European
Patent Office
Office européen
des brevets

(11) **EP 3 136 254 A1**

(12) **EUROPEAN PATENT APPLICATION**

(43) Date of publication:
**01.03.2017 Bulletin 2017/09**

(51) Int Cl.:
***G06F 17/10*** *(2006.01)* ***G06F 17/30*** *(2006.01)*

(21) Application number: **16186253.7**

(22) Date of filing: **30.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.08.2015 US 201514840318**

(71) Applicant: **Semmle Limited**
**Oxford Oxfordshire OX1 4EH (GB)**

(72) Inventor: **LYNAGH, Ian**
**Oxford, OX1 4EH (GB)**

(74) Representative: **Burda, Martin Robert**
**Fish & Richardson P.C.**
**HighLight Business Towers**
**Mies-van-der-Rohe-Straße 8**
**80807 München (DE)**

(54) **COMPUTING TRANSITIVE CLOSURES**

(57)     Methods, systems, and apparatus, including computer programs encoded on computer storage media, for computing transitive closures of relations. One of the methods includes initializing the transitive closure F of an initial iteration with the tuples in another relation f. New first tuples and new second tuples are iteratively computed until no new first tuples are generated, including: generating new first tuples on each iteration by matching destination elements of tuples in the auxiliary relation of a previous iteration with source elements of tuples in the auxiliary relation of the previous iteration, generating second tuples on each iteration by matching destination elements of the new first tuples with source elements of tuples in F of the previous iteration, and adding the new first tuples and the new second tuples to F of a current iteration.

FIG. 1

**Description**

BACKGROUND

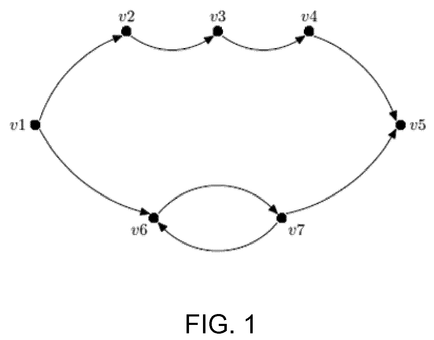

This specification relates to data processing, in particular, to calculating the transitive closure of a relation.
Tuples in a relation f can represent edges between nodes in a directed graph. FIG. 1 illustrates an example directed graph. The graph includes nodes v1 through v7 and directed edges that connect the nodes. The edges in the graph can be represented by a relation f having the following tuples:

(v1,v2)
(v2,v3)
(v3,v4)
(v4,v5)
(v1,v6)
(v6,v7)
(v7,v6)
(v7,v5)

In this example, the source element of each tuple represents a source node of an edge, and the destination element in the tuple represents the destination node of the edge.
In the present example, v1 and v5 are transitively related because there is a sequence of tuples in f such that the first tuple has v1 as its source element, the last tuple has v4 as its destination element, and every tuple in the sequence has destination element that matches a source element of a subsequent tuple in the sequence, e.g., the sequence (v1,v2), (v2,v3), (v3,v4), (v4,v5). Nodes v7 and v4 are not transitively related because there is no such sequence of tuples in f. Thus (v1,v5) is a member of F, and (v7,v4) is not a member of F. In the graph context, two nodes s and d are transitively related if there are edges in the graph such that d is reachable from s. Nodes v1 and v5 are transitively related because node v5 is reachable from node v1. Furthermore, v7 and v4 are not transitively related because node v4 is not reachable from node v7.
In a sequence of tuples representing transitively related elements in of f, e.g., (v1,v2), (v2,v3), (v3,v4), (v4,v5), the sequence can be described as n *chained uses* of f, or equivalently, n chained uses of a function f(a,b) that operates on the relation f and returns true if (a,b) is in f, where n represents the number of tuples in the sequence. Thus, when the tuples represent edges in a *graph, n chained uses of f* represents paths in the graph having a length of n steps.
In this specification, a sequence of tuples having a length n, or n chained uses of a relation f, may be referred to as *a path* having a length n even when the relation f does not represent a graph. In other words, use of the term path does not necessarily require a graph. Rather, a *path* existing from s to d merely indicates that s and d are transitively related.
Computing transitive closures can be expensive in both processing time and storage space required. This is due in part to the multiple paths being explored that result in duplicate tuples. For example, a computer system computing the transitive closure of f will explore two paths from v1 to v5. The first path goes through v2, and the second path goes through v6. Exploring both of these paths can result in generating (v1,v5) twice. Furthermore, the loop between v6 and v7 means that there are infinitely many paths between v1 and v5, e.g. (v1,v6), (v6,v7), (v7,v6), (v6, v7), (v7, v5) as well as (v1,v6), (v6,v7), (v7,v6), (v6, v7), (v7,v6), (v6, v7), (v7,v6), (v6, v7), (v7, v5).
Furthermore, a system can also end up generating many duplicate tuples due to exploring even single paths in multiple ways. For example, a system can generate the transitive relation (v1,v5) by joining multiple different subpaths, including joining (v1,v2), (v2,v5); (v1,v3), (v3,v5); and (v1,v4), (v4,v5).
The time required to compute the transitive closure of a relation depends significantly on the *longest shortest path* in f. The transitive closure F will include tuples representing all possible paths between elements in the relation f. Therefore, a computer system will need to explore at least the shortest path between each pair of transitively related elements in f. The longest of these paths, i.e. the longest shortest path, is therefore a limiting factor in how quickly the transitive closure can be computed.
Transitive closures can be computed by a computer system using predicates. Thus, a predicate F(s,d) can operate on an associated relation that is the transitive closure of another relation associated with a predicate f(s,d). Thus, the predicate F(s,d) returns true if a tuple (s,d) exists in the associated relation for F and returns false otherwise.
The general manner in which evaluation engines compute associated relations from recursively defined statements will now be described. Recursive statements are statements that reference their own output. An example query language that supports recursive statements is Datalog. The following example statement can be written in Datalog:

$$f(i) :\text{-} \ i = 1; \ (\ i = 2, \ f(1)); \ (i = 3, \ f(2))$$

This statement in Datalog recursively defines a predicate f having input parameter i, which can be expressed as f(i). The :- operator defines the predicate f(i) to have the body "i = 1; (i = 2, f(1)); (i = 3, f(2))". A semicolon represents disjunction, i.e., logical "or," and a comma represents conjunction, i.e., logical "and." For clarity, logical "and" will occasionally be spelled out as an explicit "and" operator.

The semantics of the predicate f(i) in Datalog is that the body of f(i) is evaluated to compute the associated relation for f(i). The relation is the smallest set of values i such that the body of f(i) is satisfied, i.e., evaluates to true. Then, when a value for i is provided as input to the predicate f(i), the predicate evaluates to true if the value occurs in the associated relation for f(i) and false otherwise. For example, f(1) evaluates to "true" because the term "i=1" in the body defines the associated relation to include the tuple (1). Therefore, because the associated relation includes (1), f(1) evaluates to "true." Evaluation of predicates is typically performed by an evaluation engine for the query language implemented by software installed on one or more computers.

The relation over which f(i) is evaluated may be specified within the body of the predicate. In this example, the body of f(i) defines a relation having a set of singleton tuples, e.g., {1, 2, 3}. However, the relation over which f(i) is evaluated may alternatively be specified by another predicate or may be explicitly defined. For example, the relation may be defined by a table in a database.

Evaluating a recursive predicate is to compute the least fixed point of the predicate. The least fixed point is a relation having a set of tuples that is a subset of all other fixed points of the predicate. Evaluation engines that evaluate recursive predicates can use a number of different procedures for finding the least fixed point.

Some methods for finding the least fixed point of a recursive predicate recast the predicate into a number of nonrecursive evaluation predicates. The evaluation predicates are then evaluated in sequence until a least fixed point is reached. In general, recasting a recursive predicate into a number of nonrecursive evaluation predicates may be referred to as "flattening" the recursion.

An evaluation engine for a particular query language can recast a recursive predicate as follows. A first nonrecursive predicate is defined as false. In addition to false, a sequence of subsequent nonrecursive predicates are defined according to the body of the recursive predicate. In doing so, the evaluation engine replaces each recursive term with a reference to a previous nonrecursive predicate. Logically, the number of nonrecursive predicates that can be generated is unbounded. However, the evaluation engine will halt evaluation when the least fixed point is reached.

The evaluation engine then evaluates the nonrecursive predicates in order and adds resulting tuples to the associated relation for the predicate. The evaluation engine stops when a nonrecursive predicate is reached whose evaluation adds no additional tuples to the relation. The final result is the associated relation for the recursively defined predicate.

Using this procedure, evaluating each successive predicate regenerates all of the results that have already been generated. Thus, this approach is sometimes referred to as "naive evaluation."

For simplicity, predicates in this specification will generally be represented logically and may not necessarily have the form of a language construct of any particular query language. However, the implementation of the illustrated logical predicates by an evaluation engine is normally straightforward for query languages that support recursive predicates.

Thus, to illustrate naive evaluation, an evaluation engine can recast the predicate above into the following nonrecursive evaluation predicates.

$$f_0(i) :\text{-} \ false$$

$$f_1(i) :\text{-} \ i=1; \ (i=2, \ f_0(1)); \ (i = 3, \ f_0(2))$$

$$f_2(i) :\text{-} \ i=1; \ (i=2, \ f_1(1)); \ (i = 3, \ f_1(2))$$

$$f_3(i) :\text{-} \ i=1; \ (i=2, \ f_2(1)); \ (i = 3, \ f_2(2))$$

$$\ldots$$

Or, for brevity, the evaluation predicates may be represented as:

$$f_0(i) :- \text{false}$$

$$f_{n+1}(i) :- i=1; (i=2, f_n(1)); (i = 3, f_n(2))$$

At first glance, this notation may look like a recursive definition, but it is not. This is because the subscripts of the predicates denote different nonrecursive predicates occurring in the potentially unbounded sequence of predicates. In other words, the predicate $f_{n+1}$ is not recursive because it references $f_n$, but not itself. The evaluation engine then evaluates the nonrecursive predicates in order to find the least fixed point.

An evaluation engine can use naive evaluation to compute a relation representing the transitive closure of f.

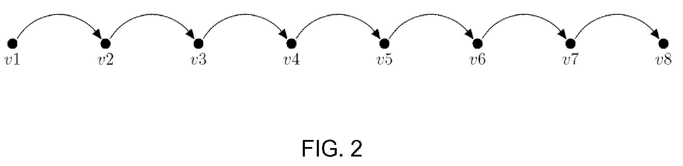

FIG. 2 illustrates another example graph. The edges of the graph in figure 2 can be represented by a relation f having the following tuples:

(v1,v2)
(v2,v3)
(v3,v4)
(v4,v5)
(v5,v6)
(v6,v7)
(v7,v8)

Evaluating the following recursive predicate will compute the transitive closure of f:

$$F(s,d) :- f(s,d); \text{exists}( a: f(s,a), F(a,d) )$$

The term "exists( a: f(s,a), F(a, d))" has an existential quantifier. A term having an existential quantifier may be referred to as an existential term. This existential term asserts that there is a data element a such that (s,a) is a tuple in f and that (a,d) is a tuple in the transitive closure F. Intuitively, this definition asserts that if (a,d) is in F and (s,a) is in f, then (s,d) is also in F.

This notation can also be thought of as generating a new tuple (s,d) by taking a first tuple (a,d) in F, where (a,d) represents a reachable path in the graph, and extending the reachable path one more step with (s,a) in f. Or equivalently, this notation can be thought of as extending a one-step path represented by (s,a) in f with another path having one or more steps, represented by (a,d) in F.

An evaluation engine can use naive evaluation to compute the transitive closure F(s,d). To do so, the evaluation engine can generate the following non-recursive evaluation predicates to flatten the recursive definition of F(s,d):

$$F_0(s,d) :- \text{false}$$

$$F_{n+1}(s,d) :- f(s,d); \text{exists}( a: f(s,a), F_n(a,d) )$$

Naive evaluation proceeds as illustrated in TABLE 1.

TABLE 1

| Predicate | Previous relation | Current relation | Comments |
|---|---|---|---|
| $F_1(s,d)$ | { } | {(v1,v2), (v2, v3), (v3, v4), (v4, v5), (v5, v6), (v6, v7), (v7, v8)} | The relation of Fo(s,d) is empty. Thus, $F_1(s,d)$ evaluates to: f(s,d); exists( a: f(s,a), $F_0(a,d)$) or (s,d) is in f OR there exists an a such that (s, a) is in f and (a,d) is in { } |

(continued)

| Predicate | Previous relation | Current relation | Comments |
|---|---|---|---|
| | | | Thus, only the tuples of f are generated. |
| $F_2(s,d)$ | {(v1, v2), (v2, v3), (v3, v4), (v4, v5), (v5, v6), (v7, v8)} | {(v1, v2), (v2, v3), (v3, v4), (v4, v5), (v5, v6), (v7, v8), (v1, v3), (v2, v4), (v3, v5), (v4, v6), (v5, v7), (v6, v8)} | $F_2(s,d)$ evaluates to: f(s,d); exists( a: f(s,a), $F_1(a,d)$) or (s,d) is in f OR there exists an a such that (s, a) is in f and (a,d) is in $F_1$. At this point, $F_1$ includes f itself, so the tuples produced are the tuples in f as well as the tuples in f extended by one step in the graph. Thus, the tuples produced represent two steps |
| | | | in the graph. Thus, {(v1, v3), (v2, v4), (v3, v5), (v4, v6), (v5, v7), (v6, v8)} are newly generated. |
| $F_3(i)$ | {(v1, v2), (v2, v3), (v3, v4), (v4, v5), (v5, v6), (v7, v8), (v1, v3), (v2, v4), (v3, v5), (v4, v6), (v5, v7), (v6, v8) } | {(v1, v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8)} | $F_3(s,d)$ evaluates to: f(s,d); exists( a: f(s,a), $F_2(a,d)$) or (s,d) is in f OR there exists an a such that (s, a) is in f and (a,d) is in $F_2$. The tuples produced are those in f and those reachable from the destinations in $F_2$, which represented up to two steps in the graph. Thus, the new tuples are those that represent three steps in the graph. Thus, {(v1, v4), (v2, v5), (v3, v6), (v4, v7), (v5, v8)} are newly generated. |
| $F_4(i)$ | {(v1, v2), (v2, v3), (v3, v4), (v4, v5), (v5, v6), (v7, v8), (v1, v3), (v2, v4), (v3, v5), | {(v1, v2), (v2, v3), (v3, v4), (v4, v5), (v5, v6), (v7, v8), (v1, v3), (v2, v4), (v3, v5), | $F_4(s,d)$ evaluates to: f(s,d); exists( a: f(s,a), $F_3(a,d)$) or (s,d) is in f OR there exists an a such that (s, a) is in f and (a,d) is in $F_3$. The tuples produced are those in f |
| | (v4, v6), (v5, v7), (v6, v8), (v1, v4), (v2, v5), (v3, v6), (v4, v7), (v5, v8) } | (v4, v6), (v5, v7), (v6, v8), (v1, v4), (v2, v5), (v3, v6), (v4, v7), (v5, v8), (v1, v5), (v2, v6), (v3, v7), (v4, v8)} | and those reachable from the destinations in $F_3$, which represented up to three steps in the graph. Thus, the new tuples are those that represent four steps in the graph. Thus, {(v1, v5), (v2, v6), (v3, v7), (v4, v8)} are newly generated. |

(continued)

| Predicate | Previous relation | Current relation | Comments |
|---|---|---|---|
| $F_5(i)$ | {(v1, v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), | {(v1,v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), | $F_5(s,d)$ evaluates to: f(s,d); exists( a: f(s,a), $F_3(a,d)$) or (s,d) is in f OR there exists an a such that (s, a) is in f and (a,d) is in $F_4$. The tuples produced are those in f and those reachable from the destinations in $F_4$, which represented up to four steps in the graph. Thus, the new tuples are those that represent five steps in the graph. Thus, {(v1, v6), (v2, v7), (v3, v8)} |
| | (v5, v8), (v1, v5), (v2, v6), (v3, v7), (v4, v8)} | (v5, v8), (v1, v5), (v2, v6), (v3, v7), (v4, v8), (v1, v6), (v2, v7), (v3, v8)} | are newly generated. |
| $F_6(i)$ | {(v1,v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v8), (v1, v6), (v2, v7), (v3, v8), (v4, v9)} | {(v1,v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v8), (v1, v6), (v2, v7), (v3, v8), (v4, v9), (v1, v7), (v2, v8)} | $F_6(s,d)$ evaluates to: f(s,d); exists( a: f(s,a), $F_5(a,d)$) or (s,d) is in f OR there exists an a such that (s, a) is in f and (a,d) is in $F_5$. The tuples produced are those in f and those reachable from the destinations in $F_5$, which represented up to five steps in the graph. Thus, the new tuples are those that represent six steps in the graph. Thus, {(v1, v7), (v2, v8) are newly generated. |
| $F_7(i)$ | {(v1,v2), (v2, v3), (v3, v4), | {(v1,v2), (v2, v3), (v3, v4), | $F_7(s,d)$ evaluates to: f(s,d); exists( a: f(s,a), $F_6(a,d)$) or |
| | (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v8), (v1, v6), (v2, v7), (v3, v8), (v4, v9), (v1, v7), (v2, v8)} | (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v8), (v1, v6), (v2, v7), (v3, v8), (v4, v9), (v1, v7), (v2, v8), (v1, v8)} | (s,d) is in f OR there exists an a such that (s, a) is in f and (a,d) is in $F_6$. The tuples produced are those in f and those reachable from the destinations in $F_6$, which represented up to six steps in the graph. Thus, the new tuples are those that represent seven steps in the graph. Thus, {(v1, v8)} is newly generated. |

(continued)

| Predicate | Previous relation | Current relation | Comments |
|---|---|---|---|
| $F_8(i)$ | {(v1,v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v8), (v1, v6), (v2, v7), (v3, v8), (v4, v9), (v1, v7), (v2, v8), (v1, v8) } | {(v1,v2), (v2, v3), (v3, v4), (v4, v5), (v5, v6), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v8), (v1, v6), (v2, v7), (v3, v8), (v4, v9), (v1, v7), (v2, v8) (v1, v8) } | $F_8(s,d)$ evaluates to: f(s,d); exists( a: f(s,a), $F_3(a,d)$) or (s,d) is in f OR there exists an a such that (s, a) is in f and (a,d) is in $F_7$. $F_7$ contains all tuples representing up to 7 steps in the graph The tuples produced are those in f and those reachable from the destinations in $F_7$, which represented up to seven steps in the graph. Because seven steps is the longest path in the graph, there are no additional tuples generated. |

When $F_8$ is evaluated, no additional tuples are added to the relation. Therefore, the evaluation engine can determine that the least fixed point has been reached. The tuples in F7 thus represent the transitive closure of f.

The evaluation engine required 8 iterations to compute the transitive closure. In general, when using this strategy an evaluation engine needs to compute *lsp*+1 iterations, where *lsp* represents the length of the longest shortest path in f.

Using naive evaluation also generated many duplicate tuples. In particular evaluation of the recursive definition of F required regenerating all the tuples that had already been generated on every single iteration. Thus, even for mildly complicated data sets, naive evaluation is very expensive.

Another prior art procedure for evaluating recursive predicates is referred to as "semi-naive evaluation." When using semi-naive evaluation, an evaluation engine flattens the recursion of the predicate in a different way than naive evaluation. In particular, the evaluation engine defines a delta predicate whose associated relation is defined to include only the new tuples found on each iteration. The least fixed point is found when an iteration is reached in which the delta predicate's associated relation is empty.

Evaluating the previous definition of F with semi-naive evaluation would avoid some of the unnecessary generation of duplicate tuples, but it would still require the same number of iterations (*lsp*+1) to find the transitive closure.

An alternative definition for computing the transitive closure of f is given by the following recursively defined predicate:

$$F(s,d) :- f(s,d); \text{exists}(\ a: F(s,a), F(a,d)\ )$$

When using either naive or semi-naive evaluation, this definition results in fewer iterations than the definition illustrated in TABLE 1.

Intuitively, this definition asserts that if (a,d) is in F and (s,a) is in F, then (s,d) is also in F. In other words, this notation can be thought of as generating a new tuple (s,d) by extending a path represented by a tuple (s,a) in F by a path represented by another tuple (a,d) that is also in F.

To illustrate using semi-naive evaluation to find the transitive closure, an evaluation engine can generate the following evaluation predicates:

$$\delta_0(s,d) :- \text{false}$$

$$F_0(s,d) :- false$$

$$\delta_{n+1}(s,d) :- ( f(s,d); (exists( a: F_n(s,a), \delta_n(a,d)); (exists( a: \delta_n(s,a), F_n(a,d))), not F_n(s,d)$$

$$F_{n+1}(s,d) :- F_n(s,d); \delta_{n+1}(s,d)$$

As mentioned above, semi-naive evaluation uses an evaluation predicate that is referred to as a delta predicate. A system can generate the delta predicate by replacing recursive calls in the original predicate with nonrecursive calls to the previous delta predicate; where a single disjunct contains multiple recursive calls, as in this example, the disjunct is duplicated once for each recursive call, as shown above. The system then generates a conjunction of the result with a negation of the predicate from the previous iteration. Thus, the delta predicate is defined to include only new tuples found in a particular iteration of the evaluation. The term "not $F_n(s,d)$" at the end of the definition for $\delta_{n+1}(s,d)$ indicates that previously found tuples do not satisfy the delta predicate for $\delta_{n+1}(s,d)$.

Evaluation of the transitive closure using semi-naive evaluation is illustrated in TABLE 2. An evaluation engine need not compare a previous relation to a current relation as was done for naive evaluation. Rather, the evaluation engine can halt when the first empty delta predicate is found.

TABLE 2

| Predicate | Relation | Comments |
|---|---|---|
| $\delta_0(s,d)$ | { } | Empty by definition |
| $F_0(s,d)$ | { } | Empty by definition |
| $\delta_1(s,d)$ | {(v1,v2), (v2, v3), (v3, v4), (v4, v5), (v5, v6), (v6, v7), (v7, v8)} | $\delta_1(s,d)$ evaluates to: (f(s,d); (exists(a: $F_0(s,a)$, $\delta_0(a,d)$); (exists(a: $\delta_0(s,a)$, $F_0(a,d)$)), not Fo(s,d) Because there are no tuples in Fo or $\delta_0$, only the tuples in f are generated. |
| $F_1(s,d)$ | {(v1,v2), (v2, v3), (v3, v4), (v4, v5), (v5, v6), (v6, v7), (v7, v8) } | $F_1(s,d)$ evaluates to: $F_0(s,d)$; $\delta_1(s,d)$ or (s,d) is in { } OR (s,d) is in {(v1, v2), (v2, v3), (v3, v4), (v4, v5), (v5, v6), (v6, v7), (v7, v8)} Thus, the tuples in f are generated. |
| $\delta_2(s,d)$ | {(v1, v3), (v2, v4), (v3, v5), (v4, v6), (v5, v7), (v6, v8) } | $\delta_2(s,d)$ evaluates to: (f(s,d); (exists(a: $F_1(s,a)$, $\delta_1(a,d)$); (exists(a: $\delta_1(s,a)$, $F_1(a,d)$)), not $F_1(s,d)$ The tuples produced are those that are reachable from a source in $F_1$ or a source in $\delta_1$. Since $F_1$ and $\delta_1$ are both equal to f, the tuples generated are those that represent two steps in the graph. |
| $F_2(s,d)$ | {(v1,v2), (v2, v3), (v3, v4), (v4, v5), (v5, v6), (v6, v7), (v7, v8), (v1, v3), (v2, v4), (v3, v5), (v4, v6), (v5, v7), (v6, v8)} | $F_2(s,d)$ evaluates to: $F_1(s,d)$; $\delta_2(s,d)$ or (s,d) is in {(v1, v2), (v2, v3), (v3, v4), (v4, v5), (v5, v6), (v6, v7), (v7, v8) } OR (s,d) is in {(v1, v3), (v2, v4), (v3, v5), (v4, v6), (v5, v7), (v6, v8)} |

(continued)

| Predicate | Relation | Comments |
|---|---|---|
| $\delta_3(s,d)$ | {(v1, v4), (v1, v5), (v2, v5), (v2, v6), (v3, v6), (v3, v7), (v4, v7), (v4, v8), (v5, v8)} | $\delta_3(s,d)$ evaluates to: (f(s,d); (exists(a: $F_2$(s,a), $\delta_2$(a,d)); (exists(a: $\delta_2$(s,a), $F_2$(a,d))), not $F_2$(s,d) The tuples produced are those that form a transitive relation from a first relation in $F_2$ or $\delta_2$ and a second relation in $F_2$ or $\delta_2$. Both $F_2$ and $\delta_2$ include tuples that represent one step and two steps in the graph, so the new tuples produced by combining those tuples represent 3 and 4 steps in the graph. Thus, the following tuples are generated: {(v1, v4), (v1, v5), (v2, v5), (v2, v6), (v3, v6), (v3, v7), (v4, v7), (v4, v8), (v5, v8)} |
| $F_3(s,d)$ | {(v1,v2), (v2, v3), (v3, v4), (v4, v5), (v5, v6), (v6, v7), (v7, v8), (v1, v3), (v2, v4), (v3, v5), (v4, v6), (v5, v7), (v6, v8), (v1, v4), (v1, v5), (v2, v5), (v2, v6), (v3, v6), (v3, v7), (v4, v7), (v4, v8), (v5, v8)} | $F_3(s,d)$ evaluates to: $F_2$(s,d); $\delta_3$(s,d) or (s,d) is in {(v1, v2), (v2, v3), (v3, v4), (v4, v5), (v5, v6), (v6, 7), (v7, v8), (v1, v3), (v2, v4), (v3, v5), (v4, v6), (v5, v7), (v6, v8)} OR (s,d) is in {(v1, v4), (v1, v5), (v2, v5), (v2, v6), (v3, v6), (v3, v7), (v4, v7), (v4, v8), (v5, v8) } |
| $\delta_4(s,d)$ | {(v1, v6), (v1, v7), (v1, v8), (v2, v7), (v2, v8), (v3, v8)} | $\delta_4(s,d)$ evaluates to: (f(s,d); (exists(a: $F_3$(s,a), $\delta_3$(a,d)); (exists(a: $\delta_3$(s,a), $F_3$(a,d))), not $F_3$(s,d) The tuples produced are those that form a transitive relation from a first tuple in $F_3$ and a second tuple in $\delta_3$ or from a first tuple in $\delta_3$ and a second tuple in $F_3$. |
| | | Both $F_3$ and $\delta_3$ include tuples that represent one, two, three, or four steps in the graph, so the new tuples produced by transitively combining those tuples represent up to 8 steps in the graph. Thus, the following tuples are generated: {(v1, v6), (v1, v7), (v1, v8), (v2, v7), (v2, v8), (v3, v8)} The tuples formed are those in $\delta_3$ that can be extended by those in $F_3$. |
| $F_3(s,d)$ | {(v1,v2), (v2, v3), (v3, v4), (v4, v5), (v5, v6), (v6, v7), (v7, v8), (v1, v3), (v2, v4), (v3, v5), (v4, v6), (v5, v7), (v6, v8), (v1, v4), (v1, v5), (v2, v5), (v2, v6), (v3, v6), (v3, v7), (v4, v7), (v4, v8), (v5, v8), (v1, v6), (v1, v7), (v1, v8), (v2, v7), (v2, v8), (v3, v8)} | $F_4(s,d)$ evaluates to: $F_3$(s,d); $\delta_4$(s,d) or (s,d) is in {(v1, v2), (v2, v3), (v3, v4), (v4, v5), (v5, v6), (v6, 7), (v7, v8), (v1, v3), (v2, v4), (v3, v5), (v4, v6), (v5, v7), (v6, v8), (v1, v4), (v1, v5), (v2, v5), (v2, v6), (v3, v6), (v3, v7), (v4, v7), (v4, v8), (v5, v8)} OR (s,d) is in { (v1, v6), (v1, v7), (v1, v8), (v2, v7), (v2, v8), (v3, v8) } |

Using this alternate definition of the transitive closure required only three iterations. In general, an evaluation engine using this technique to compute the transitive closure needs to compute $O(\log_2(lsp))$ iterations. Therefore, it is generally more efficient, in terms of iterations required, than naive evaluation, the previous method.

However, this strategy still generates many duplicates tuples. Consider the tuples generated when considering s=v1 during the iteration of $F_3$. The tuples generated during this iteration are illustrated in TABLE 3:

TABLE 3

| Disjunct Used | Tuples Generated | Generated From |
|---|---|---|
| exists( a: $F_3$(s,a), $\delta_3$(a,d)) | (v1, v5) | (v1, v2), (v2, v5) |
| | (v1, v6) | (v1, v2), (v2, v6) |
| | (v1, v6) | (v1, v3), (v3, v6) |
| | (v1, v7) | (v1, v3), (v3, v7) |
| | (v1, v7) | (v1, v4), (v4, v7) |
| | (v1, v8) | (v1, v4), (v4, v8) |
| | (v1, v8) | (v1, v5), (v5, v8) |
| exists( a: $\delta_3$(s,a), $F_3$(a,d)) | (v1, v5) | ( 1, v4), (v4, v5) |
| | (v1, v6) | (v1, v4), (v4, v6) |
| | (v1, v7) | (v1, v4), (v4, v7) |
| | (v1, v8) | (v1, v4), (v4, v8) |
| | (v1, v6) | (v1, v5), (v5, v6) |
| | (v1, v7) | (v1, v5), (v5, v7) |
| | (v1, v8) | (v1, v5), (v5, v8) |

On this iteration for v1, only four new tuples were generated: (v1,v5), (v1,v6), (v1,v7), and (v1,v8). However, the tuple (v1,v5) was generated twice, (v1, v6) was generated three times, (v1,v7) was generated three times, and (v1,v8) was generated three times.

In general, this approach generates a quadratic number of duplicate tuples, but only a linear number of new tuples, on each iteration.

SUMMARY

This specification describes technologies relating to computing the transitive closure of a relation more efficiently in terms of iterations required and duplicate tuples produced.

The subject matter described in this specification can be implemented in particular embodiments so as to realize one or more of the following advantages. The transitive closure of a relation can be computed more quickly and using fewer computational resources. The transitive closure can be computed in $O(\log_2(lsp))$ time while also reducing or eliminating duplicate tuples that are generated.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 illustrates an example directed graph.
FIG. 2 illustrates another example graph.
FIG. 3 is a flow chart of an example process for computing the transitive closure of a relation.

Like reference numbers and designations in the various drawings indicate like elements.

DETAILED DESCRIPTION

In general, all terms used in this description have the meaning a skilled person will commonly understand.

As used in this description, a "relation" is a set of tuples ($t_1$, ..., $t_n$), each tuple having n ≥ 1 data elements ti. Each element ti is a corresponding value, which may represent a value of a corresponding attribute. The attribute will generally have an attribute name. The correspondence between attribute and value is determined by the position of the value in the tuple, i.e., each attribute has a corresponding position. Relations are commonly thought of as, represented as, and referred to as tables in which each row is a tuple and each column is an attribute.

As used in this description, a "binary relation" is a relation whose tuples have two elements each.

As used in this description, a "source element" of a tuple in a binary relation is the first element of the tuple.

As used in this description, a "destination element" of a tuple in a binary relation is the second element of the tuple.

As used in this description, a first element of a first tuple "matches" a second element of a second tuple if the first element and the second element have the same value.

As used in this description, a "sequence of tuples" is an ordering of tuples such that every tuple in the order has a destination element that matches a source element of a subsequent tuple in the order, except for the last tuple in the sequence, which has no subsequent tuple.

As used in this description, a first element in a first tuple in f is "transitively related" to a second element in a second tuple in f if a sequence of tuples that occur in f exists such that the first tuple in the sequence contains the first element as a source element, the last tuple in the sequence contains the second element as a destination element, and every tuple in the sequence has a destination element that matches a source element of a subsequent tuple in the sequence, except for the last tuple in the sequence, which has no subsequent tuple.

As used in this description, a first tuple and a second tuple "transitively relate" a source element of the first tuple and a destination element of the second tuple when the first tuple and the second tuple are the beginning and end of a sequence of tuples.

As used in this description, the "transitive closure" of a relation f is another relation F that that contains all tuples in f and tuples of all elements that are transitively related by the tuples in f.

As used in this description, a "chained use" of a relation means adding a tuple to a sequence of tuples such that a destination element of the previously last tuple matches a source element of the added tuple.

As used in this description, a "path" is a sequence of tuples. A path of length n can be generated with n chained uses of a relation.

As used in this description, the "shortest path" is a path having the shortest sequence of tuples that transitively relate two elements in a relation.

As used in this description, the "longest shortest path" in a relation is a shortest path in the relation that is longer than any other shortest path in the relation.

As used in this description, an "auxiliary relation" is a relation in addition to the original relation f and the transitive closure F, and which includes tuples representing shortest paths having $2^n$ steps for each of n iterations.

As used in this description, a "predicate" is a function defined by one or more statements that maps one or more input parameters to true or false. A predicate operates on an associated relation and returns true or false depending on whether a tuple defined by the input parameters occurs in the associated relation.

As used in this description, "evaluating a predicate" means using the statements of the predicate definition to compute the tuples that belong to the relation associated with the predicate.

This specification describes improved ways of computing the transitive closure of a relation. This specification also describes mechanisms for evaluating a relation representing a transitive closure.

An example application for an evaluation engine that can compute a transitive closure of a relation occurs in static analysis systems. Static analysis refers to techniques for analyzing computer software source code without executing the source code as a software program. A static analysis system can use a query language to determine a variety of attributes about source code in a code base.

In static analysis systems, it is useful to represent control flows of a computer program. For example, a software developer might want to know if a function A defined in a code base ever calls another function B, either directly or indirectly. Similarly, a software developer also might want to know if a variable is always initialized before it is used, or whether a control flow exists in the software in which the variable is used before it is initialized.

In very large code bases, determining an answer to these questions using manual inspection or simple text searching may be difficult or impossible. In addition, actually running the software may not yield a correct answer to the question if the testing procedures omit control flows that nevertheless exist in the software.

A static analysis system can solve this problem by processing source code in a code base to generate a relation f representing relationships between source code elements. For example, the relation can include tuples (p,c) where p represents a calling function and c represents a called function. In large code bases, such a relation may include millions of such tuples.

The static analysis system can then compute the transitive closure of f. After doing so, in order to determine whether a control flow exists in the software in which the function B is called by the function A, the system merely needs to determine whether or not (A,B) exists in the transitive closure of f.

Transitive closures are useful in many other applications and industries. For example, some digital authentication mechanisms, e.g., Pretty Good Privacy (PGP), allow a first user to digitally sign a public key of a second user. Doing so signifies that the first user trusts the second user. If a relation contains information about which users trust which other users, a transitive closure of the relation can represent chains of trust among the users. Thus, if the second user trusts a third user, the first user can or should be expected to also trust the third user. Therefore, the transitive closure can reveal such chains of trust among the users.

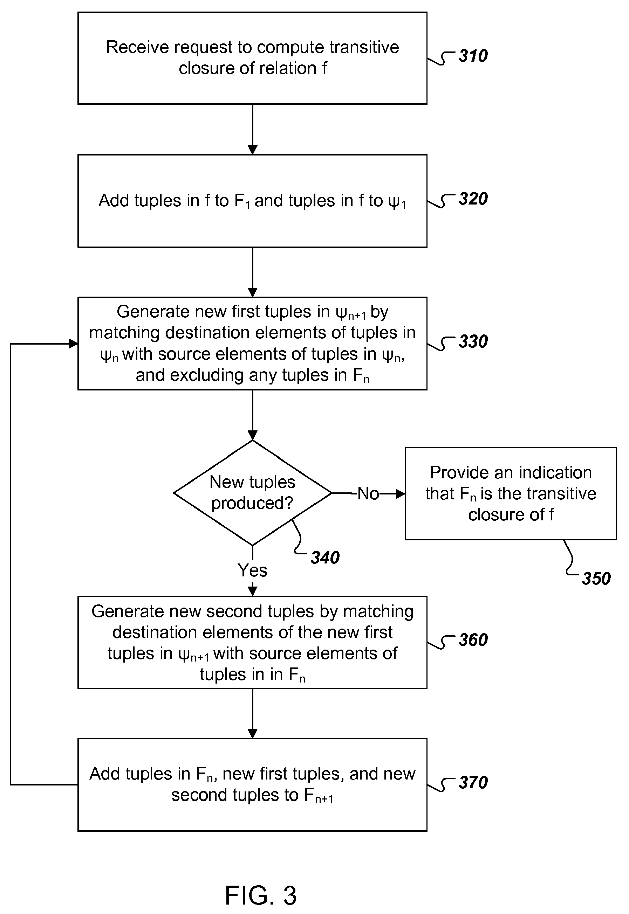

FIG. 3 is a flow chart of an example process for computing the transitive closure of a relation. In general, the system will iteratively add tuples to a relation $F_n$ for each iteration n. The process will be described as being performed by an appropriately programmed system of one or more computers.

The system receives a request to compute the transitive closure of a relation (310). As described above, computing the transitive closure of a relation f generates a new relation F. The system can receive a request from a user who specifies the relation f. The system can also receive a request to automatically generate transitive closures of relations of source code elements as part of a static analysis process.

The system adds the tuples in f to both $F_1$ and $\psi_1$ (320). Adding the tuples in f to $F_1$ initializes the transitive closure relation.

While computing the transitive closure, the system will also make use of an auxiliary relation $\psi_{n+1}$ on each iteration. In general, the relation $\psi_{n+1}$ includes tuples representing shortest paths having $2^n$ steps on each iteration n. Thus, the length of the paths represented by tuples in $\psi_{n+1}$ doubles on each iteration. So to calculate $\psi_1$, the system chooses the shortest paths having $2^{1-1} = 1$ step, and simply adds the tuples of f to $\psi_1$.

The system generates new first tuples in $\psi_{n+1}$ by matching destination elements of tuples in $\psi_n$ with source elements of tuples in $\psi_n$, and excluding any tuples in $F_n$ (330). In other words, the system determines which tuples in $\psi_n$ have a destination element that matches a source element of another tuple in $\psi_n$.

The new first tuples for iteration n will be tuples representing $2^n$ chained uses of f. If the tuples represent edges in a graph, conceptually this step can be thought of as extending paths in the graph represented by tuples in $\psi_n$ with paths also represented by the tuples in $\psi_n$. Because the tuples in $\psi_n$ represent paths having length $2^{n-1}$, the new first tuples in $\psi_{n+1}$ will represent a doubling of those path lengths, resulting in paths having a length $2^n$.

The system determines whether new first tuples have been produced on this iteration (340). If not, the system provides an indication that $F_n$ is the transitive closure of f (branch to 350).

If new first tuples have been produced, the system generates new second tuples by matching destination elements of the new first tuples in $\psi_{n+1}$ with source elements of the tuples in $F_n$ (branch to 360). In other words, the system uses the newly generated first tuples of $\psi_{n+1}$ to generate new second tuples.

To do so, the system determines which of the new first tuples in $\psi_{n+1}$ have a destination element that matches a source element of a tuple in $F_n$. Note that $F_n$ has not been updated to include the new first tuples.

If the tuples represent edges in a graph, this step can be thought of as extending paths in the graph represented by the new first tuples in $\psi_{n+1}$ with paths represented by the tuples in $F_n$. Doing so generates new second tuples that represent paths having a length greater than $2^n$ steps and less than $2^{n+1}$ steps.

The system adds the tuples in $F_n$, the new first tuples, and the new second tuples to $F_{n+1}$. (370). In other words, the system defines a new relation $F_{n+1}$. In practice, the system need not generate an entirely new relation. Rather, the system can merely add the new first tuples and the new second tuples to the relation of $F_n$ and designate the resulting relation as $F_{n+1}$.

In the graph example, the sets of tuples that make up $F_{n+1}$ respectively represent (1) paths having length less than $2^n$ for $F_n$, (2) paths having length of exactly $2^n$ for $\psi_{n+1}$, and (3) paths having length greater than $2^n$ but less than $2^{n+1}$ for the tuples generated by extending $\psi_{n+1}$ by the tuples in $F_n$. Combined together, these three sets represent all tuples of all elements separated by shortest paths of length less than $2^{n+1}$.

This approach reduces or eliminates duplicate tuples for the following reasons. The relation for $\psi_{n+1}$ has, on iteration n, tuples representing shortest paths of length $2^n$. Therefore, a tuple (a,c) in $\psi_{n+1}$ represents a shortest path between a tuple (a,b) in $F_n$ and a tuple (b,c) in $F_n$. The tuple (a,c) necessarily represents the shortest path between (a,b) and (b,c) because if a shorter path existed, it would already be in $F_n$, and therefore would not be in $\psi_{n+1}$, since elements of Fn are explicitly excluded from $\psi_{n+1}$.

Then, the system extends the paths in $\psi_{n+1}$ with all shortest paths having length less than $2^n$, resulting in all shortest paths having a length between $2^n$ and $2^{n+1}$. Notably, the system does not need to explore or extend any paths having a length less than $2^n$ because all of those paths were previously explored on a previous iteration. In other words, once a tuple (s,d) is added to $F_n$, the path that generated (s,d) is not explored again.

Therefore, the system only generates tuples representing shortest paths, which eliminates many if not most duplicate generation when computing the transitive closure. In this example, it results in eliminating duplicates.

In general, duplicates are only generated due to branching or loops in the tuples of f. In FIG. 1, for example, (v1,v5) would be generated twice due to the path through v2, v3, and v4 and the path through v6 and v7. And (v1, v6) would be generated twice due to (v1, v6) in f and the path (v1,v6), (v6,v7), (v7,v6).

The proportion of duplicates that are still generated depends on the type of data represented by the relation. For example, computer software tends to have long sequences of sequentially evaluated expressions and statements, with relatively few branches and loops. Therefore, where the data represents the control flow of a computer program, as is the case for static analysis, almost all of the duplication will be eliminated.

To efficiently calculate the transitive closure of f, an evaluation engine can perform the example process by evaluating the following predicates for n=1, 2, etc., until $\psi_{n+1}$ is empty, at which point $F_n$ will be the transitive closure off:

$$\psi_1(s,d) :- \quad f(s,d)$$

$$F_1(s,d) :- \quad f(s,d)$$

$$\psi_{n+1}(s,d) :- \quad exists(\ a:\ \psi_n(s,a),\ \psi_n(a,d)),\ not\ F_n(s,d)$$

$$F_{n+1}(s,d) :- \quad F_n(s,d);$$

$$\psi_{n+1}(s,d);$$

$$exists(\ a:\ \psi_{n+1}(s,a),\ F_n(a,d))$$

Computing the $\psi_{n+1}(s,d)$ predicate represents computing the new first tuples on each iteration. The existential term "exists(a: $\psi_{n+1}(s,a)$, $F_n(a,d)$)" represents computing the new second tuples on each iteration.

Evaluation of the transitive closure using these predicates is illustrated below in TABLE 4. This example uses the example relation f that represented edges in the graph shown in FIG. 2. Notably, using these predicates result in the transitive closure being generated in $\log_2(lsp)$ time with no duplicate tuples being generated at all.

TABLE 4

| Predicate | Relation | Comments |
|---|---|---|
| $\psi_1(s,d)$ | { (v1, v2), (v2, v3), (v3, v4), (v4, v5), (v5, v6), (v6, v7), (v7, v8)} | $\psi_1(s,d)$ evaluates to: f(s,d) |
| $F_1(s,d)$ | { (v1, v2), (v2, v3), (v3, v4), (v4, v5), (v5, v6), (v6, v7), (v7, v8)} | $F_1(s,d)$ evaluates to: f(s,d) |
| $\psi_2(s,d)$ | {(v1, v3), (v2, v4), (v3, v5), (v4, v6), (v5, v7), (v6, v8) } | $\psi_2(s,d)$ evaluates to: exists( a: $\psi_1(s,a)$, $\psi_1(a,d)$), not $F_1(s,d)$ The tuples in $\psi_2$ are tuples representing paths in $\psi_1$ extended by paths in $\psi_1$. The tuples in $\psi_2$ represent shortest paths that are $2^1$ steps long, which in this case is 2 steps in the graph. |
| $F_2(s,d)$ | {(v1,v2), (v2, v3), (v3, v4), (v4, v5), | $F_2(s,d)$ evaluates to: $F_1(s,d)$; $\psi_2(s,d)$; exists( a: $\psi_2(s,a)$, $F_1(a,d)$) The tuples produced are those in $F_1$, those in $\psi_2$, or |
| | (v5, v6), (v6, v7), (v7, v8), (v1, v3), (v2, v4), (v3, v5), (v4, v6), (v5, v7), (v6, v8), (v1, v4), (v2, v5), (v3, v6), (v4, v7), (v5, v8) } | those in $\psi_2$ that can be extended by a tuple in $F_1$. We have: F1: {(v1, v2), (v2, v3), (v3, v4), (v4, v5), (v5, v6), (v6, v7), (v7, v8)} ; $\psi_2$: (v1, v3), (v2, v4), (v3, v5), (v4, v6), (v5, v7), (v6, v8) ; For the last term, because $F_1$ includes only the tuples in f, $\psi_2$ is only going to be extended by single steps in the graph. Since $\psi_2$ included tuples representing two steps in the graph, the last term will include tuples representing three steps in the graph, or: {(v1, v4), (v2, v5), (v3, v6), (v4, v7), (v5, v8)} |

(continued)

| Predicate | Relation | Comments |
|---|---|---|
| | | In other words, $F_1$ includes tuples representing one step in the graph, $\psi_2$ includes tuples representing two steps in the graph, and the last term generates tuples representing three steps in the graph. Thus, $F_2$ will now have tuples representing one, two, and three steps in the graph. |
| $\psi_3(s,d)$ | {(v1, v5), (v2, v6), (v3, v7), (v4, v6) } | $\psi_3(s,d)$ evaluates to: exists(a: $\psi_2(s,a)$, $\psi_2(a,d)$), not $F_2(s,d)$ The tuples in $\psi_3$ are tuples representing paths in $\psi_2$ extended by paths in $\psi_2$. The tuples in $\psi_3$ represent paths that are $2^2$ long, which in this case is 4 steps in the graph. |
| $F_3(s,d)$ | {(v1,v2), (v2, v3), (v3, v4), (v4, v5), (v5, v6), (v6, v7), (v7, v8), (v1, v3), (v2, v4), (v3, v5), (v4, v6), (v5, v7), (v6, v8), (v1, v4), (v2, v5), (v3, v6), (v4, v7), (v5, v8), (v1, v5), (v2, v6), (v3, v7), (v4, v6), (v1, v6), | $F_3(s,d)$ evaluates to: $F_2(s,d)$; $\psi_3(s,d)$; exists( a: $\psi_3(s,a)$, $F_2(a,d)$) The tuples produced are those in $F_2$, those in $\psi_3$, or those in $\psi_3$ that can be extended by a tuple in $F_2$. As described above, $F_2$ included all tuples representing one, two, and three steps in the graph, and $\psi_3$ included tuples that represent four steps in the graph. Thus, the four-step tuples in $\psi_3$ are going to be extended by all other tuples that represent one, two, and three steps in the graph, which will result in all tuples that include five, six, and seven steps in the graph: {(v1, v6), (v1, v7), (v1, v8), (v2, v7), (v2, v8), (v3, v8 )} |
| | (v1, v7), (v1, v8), (v2, v7), (v2, v8), (v3, v8)} | |
| $\psi_4(s,d)$ | { } | $\psi_4(s,d)$ evaluates to: exists( a: $\psi_3(s,a)$, $\psi_3(a,d)$), not $F_3(s,d)$ The tuples in $\psi_4$ are tuples representing paths in $\psi_3$ extended by paths in $\psi_3$, or tuples representing paths having length $2^3 = 8$ steps. However, since there are no such paths of 8 steps in the graph, $\psi_4(s,d)$ is empty. |

After the system determines that $\psi_4(s,d)$ is empty, the system can end processing. This is because if $\psi_4(s,d)$ is empty, there are no new first tuples to be extended and thus, no second tuples either. Therefore, no new tuples are generated on this iteration.

Using this evaluation process, the system can compute the transitive closure in $\lceil \log_2(lsp) \rceil + 1$ iterations without generating any duplicate tuples.

The examples above assume that the tuples of the relation f are ordered. Thus, in the graph context, the relation f represents edges in a directed graph. If, however, the relation f has unordered tuples, e.g., for an undirected graph, the system can use the same procedure described above on a new relation g(s,d) that is the disjunction of f(s,d) and f(d,s). In other words, the relation g includes all tuples in f, as well, as new tuples generated by reversing the source and destination elements of the tuples in f.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

Control of the various systems described in this specification, or portions of them, can be implemented in a computer program product that includes instructions that are stored on one or more non-transitory machine-readable storage media, and that are executable on one or more processing devices. The systems described in this specification, or portions of them, can be implemented as an apparatus, method, or electronic system that may include one or more processing devices and memory to store executable instructions to perform the operations described in this specification.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

In addition to the embodiments of the attached embodiments and the embodiments described above, the following embodiments are also innovative:

Embodiment 1 is a method comprising:

receiving a request to compute a transitive closure F of a relation f, wherein the relation f includes tuples that each relate a source element s to a destination element d;
initializing F of an initial iteration with the tuples in f;

initializing an auxiliary relation of the initial iteration with the tuples in f;
iteratively computing new first tuples and new second tuples on each iteration until no new first tuples are generated, including:

generating new first tuples on each iteration by matching destination elements of tuples in the auxiliary relation of the previous iteration with source elements of tuples in the auxiliary relation of the previous iteration,

generating second tuples on each iteration by matching destination elements of the new first tuples with source elements of tuples in F of the previous iteration, and

adding the new first tuples and the new second tuples to F of the current iteration; and

providing an indication that the tuples in F of the current iteration represent the transitive closure of f.

Embodiment 2 is the method of embodiment 1, further comprising:

generating evaluation predicates that include:

a first predicate that when evaluated generates the new first tuples,
a second predicate that when evaluated generates the new second tuples, and
an $F_{n+1}$ predicate that when evaluated generates a relation having tuples in $F_n$, tuples generated by the first predicate, and tuples generated by the second predicate,

wherein iteratively computing new first tuples and new second tuples comprises iteratively evaluating the evaluation predicates.

Embodiment 3 is the method of embodiment 2, wherein:

the first predicate is defined by:

$$\psi_1(s,d) \text{ :- } f(s,d)$$

$$\psi_{n+1}(s,d) \text{ :- } exists(\ a: \ \psi_n(s,a), \psi_n(a,d)), \neg F_n(s,d),$$

and the second predicate is defined by:

$$F_1(s,d) \text{ :- } f(s, d)$$

$$F_{n+1}(s,d) \text{ :- } F_n(s,d); \psi_{n+1}(s,d); exists(\ a: \psi_{n+1}(s,a), F_n(a,d)).$$

Embodiment 4 is the method of any one of embodiments 1-3, further comprising:

adding the new first tuples to a new auxiliary relation for a current iteration.

Embodiment 5 is the method of any one of embodiments 1-4, wherein the new first tuples for an iteration n includes tuples representing $2^n$ chained uses of f.
Embodiment 6 is the method of any one of embodiments 1-5, wherein the second tuples for an iteration n includes tuples representing between $2^n$ and $2^{n+1}$ chained uses of f.
Embodiment 7 is the method of any one of embodiments 1-6, further comprising computing the transitive relation of f while generating duplicate tuples only due to branches and loops.
Embodiment 8 is the method of any one of embodiments 1-7, further comprising computing the transitive relation of f in $O(\log_2(lsp))$ iterations, wherein *lsp* represents a length of the longest shortest path of tuples in F.
Embodiment 9 is a system comprising: one or more computers and one or more storage devices storing instructions that are operable, when executed by the one or more computers, to cause the one or more computers to perform the method of any one of embodiments 1 to 8.

Embodiment 10 is a computer storage medium encoded with a computer program, the program comprising instructions that are operable, when executed by data processing apparatus, to cause the data processing apparatus to perform the method of any one of embodiments 1 to 8.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Embodiments

Although the present invention is defined in the attached claims, it should be understood that the present invention can also (alternatively) be defined in accordance with the following groups of embodiments:

1. A computer implemented method comprising:

receiving a request to compute a transitive closure F of a relation f, wherein the relation f includes tuples that each relate a source element s to a destination element d;
initializing F of an initial iteration with the tuples in f;
initializing an auxiliary relation of the initial iteration with the tuples in f;
iteratively computing new first tuples and new second tuples on each iteration until no new first tuples are generated, including:

generating new first tuples on each iteration by matching destination elements of tuples in the auxiliary relation of a previous iteration with source elements of tuples in the auxiliary relation of the previous iteration,
generating second tuples on each iteration by matching destination elements of the new first tuples with source elements of tuples in F of the previous iteration, and
adding the new first tuples and the new second tuples to F of a current iteration; and

providing an indication that the tuples in F of the current iteration represent the transitive closure of f.

2. The method of embodiment 1, further comprising:

generating evaluation predicates that include:

a first predicate that when evaluated generates the new first tuples,
a second predicate that when evaluated generates the new second tuples, and
an $F_{n+1}$ predicate that when evaluated generates a relation having tuples in $F_n$, tuples generated by the first predicate, and tuples generated by the second predicate,

wherein iteratively computing new first tuples and new second tuples comprises iteratively evaluating the evaluation predicates.

3. The method of embodiment 2, wherein:

the first predicate is defined by:

$$\psi 1(s,d) : \ f(s,d)$$

$$\psi n+1(s,d) : \ exists(\ a:\ \psi n(s,a),\ \psi n\ (a,d)),\ \neg Fn(s,d),$$

and the second predicate is defined by:

$$F1(s,d) : \ f(s,\ d)$$

$$Fn+1(s,d) : \ Fn(s,d);\ \psi n+1(s,d);\ exists(\ a:\ \psi n+1(s,a),\ Fn(a,d)).$$

4. The method of embodiment 1, further comprising:

adding the new first tuples to a new auxiliary relation for a current iteration.

5. The method of embodiment 1, wherein the new first tuples for an iteration n includes tuples representing 2n chained uses of f.
6. The method of embodiment 1, wherein the second tuples for an iteration n includes tuples representing between 2n and 2n+1 chained uses of f.
7. The method of embodiment 1, further comprising computing the transitive relation of f while generating duplicate tuples only due to branches and loops.
8. The method of embodiment 1, further comprising computing the transitive relation of f in O(log2(lsp)) iterations, wherein lsp represents a length of a longest shortest path of tuples in F.
9. A system comprising:

one or more computers and one or more storage devices storing instructions that are operable, when executed by the one or more computers, to cause the one or more computers to perform operations comprising:

receiving a request to compute a transitive closure F of a relation f, wherein the relation f includes tuples that each relate a source element s to a destination element d;
initializing F of an initial iteration with the tuples in f;
initializing an auxiliary relation of the initial iteration with the tuples in f;
iteratively computing new first tuples and new second tuples on each iteration until no new first tuples are generated, including:

generating new first tuples on each iteration by matching destination elements of tuples in the auxiliary relation of a previous iteration with source elements of tuples in the auxiliary relation of the previous iteration,
generating second tuples on each iteration by matching destination elements of the new first tuples with source elements of tuples in F of the previous iteration, and
adding the new first tuples and the new second tuples to F of a current iteration; and

providing an indication that the tuples in F of the current iteration represent the transitive closure of f.

10. The system of embodiment 9, wherein the operations further comprise:

generating evaluation predicates that include:

a first predicate that when evaluated generates the new first tuples,
a second predicate that when evaluated generates the new second tuples, and
an Fn+1 predicate that when evaluated generates a relation having tuples in Fn, tuples generated by the first predicate, and tuples generated by the second predicate,

wherein iteratively computing new first tuples and new second tuples comprises iteratively evaluating the evaluation predicates.

11. The system of embodiment 10, wherein:

the first predicate is defined by:

$$\psi 1(s,d) : f(s,d)$$

$$\psi n+1(s,d) : exists( a: \psi n(s,a), \psi n (a,d)), \neg Fn(s,d),$$

and the second predicate is defined by:

$$F1(s,d) : f(s, d)$$

$$Fn+1(s,d) : Fn(s,d); \psi n+1(s,d); exists( a: \psi n+1(s,a), Fn(a,d)).$$

12. The system of embodiment 9, wherein the operations further comprise:

adding the new first tuples to a new auxiliary relation for a current iteration.

13. The system of embodiment 9, wherein the new first tuples for an iteration n includes tuples representing 2n chained uses of f.
14. The system of embodiment 9, wherein the second tuples for an iteration n includes tuples representing between 2n and 2n+1 chained uses of f.
15. The system of embodiment 9, wherein the operations further comprise computing the transitive relation of f while generating duplicate tuples only due to branches and loops.
16. The system of embodiment 9, wherein the operations further comprise computing the transitive relation of f in O(log2(lsp)) iterations, wherein lsp represents a length of a longest shortest path of tuples in F.
17. A computer program product, encoded on one or more non transitory computer storage media, comprising instructions that when executed by one or more computers cause the one or more computers to perform operations comprising:

receiving a request to compute a transitive closure F of a relation f, wherein the relation f includes tuples that each relate a source element s to a destination element d;
initializing F of an initial iteration with the tuples in f;
initializing an auxiliary relation of the initial iteration with the tuples in f;
iteratively computing new first tuples and new second tuples on each iteration until no new first tuples are generated, including:

generating new first tuples on each iteration by matching destination elements of tuples in the auxiliary relation of a previous iteration with source elements of tuples in the auxiliary relation of the previous iteration,
generating second tuples on each iteration by matching destination elements of the new first tuples with source elements of tuples in F of the previous iteration, and
adding the new first tuples and the new second tuples to F of a current iteration; and

providing an indication that the tuples in F of the current iteration represent the transitive closure of f.

18. The computer program product of embodiment 17, wherein the operations further comprise:

generating evaluation predicates that include:

a first predicate that when evaluated generates the new first tuples,
a second predicate that when evaluated generates the new second tuples, and
an Fn+1 predicate that when evaluated generates a relation having tuples in Fn, tuples generated by the first predicate, and tuples generated by the second predicate,

wherein iteratively computing new first tuples and new second tuples comprises iteratively evaluating the evaluation predicates.

19. The computer program product of embodiment 18, wherein:

the first predicate is defined by:

$$\psi 1(s,d) : f(s,d)$$

$$\psi n+1(s,d) : exists(\ a:\ \psi n(s,a), \psi n\ (a,d)), \neg Fn(s,d),$$

and the second predicate is defined by:

$$F1(s,d) : f(s,\ d)$$

$$Fn+1(s,d) : Fn(s,d); \psi n+1(s,d); exists(\ a: \psi n+1(s,a), Fn(a,d)).$$

20. The computer program product of embodiment 17, wherein the operations further comprise:

adding the new first tuples to a new auxiliary relation for a current iteration.

21. The computer program product of embodiment 17, wherein the new first tuples for an iteration n includes tuples representing 2n chained uses of f.
22. The computer program product of embodiment 17, wherein the second tuples for an iteration n includes tuples representing between 2n and 2n+1 chained uses of f.
23. The computer program product of embodiment 17, wherein the operations further comprise computing the transitive relation of f while generating duplicate tuples only due to branches and loops.
24. The computer program product of embodiment 17, wherein the operations further comprise computing the transitive relation of f in $O(log2(lsp))$ iterations, wherein lsp represents a length of a longest shortest path of tuples in F.

**Claims**

1. A computer-implemented method comprising:

receiving a request to compute a transitive closure F of a relation f, wherein the relation f includes tuples that each relate a source element s to a destination element d;
initializing F of an initial iteration with the tuples in f;
initializing an auxiliary relation of the initial iteration with the tuples in f;
iteratively computing new first tuples and new second tuples on each iteration until no new first tuples are generated, including:

generating new first tuples on each iteration by matching destination elements of tuples in the auxiliary relation of a previous iteration with source elements of tuples in the auxiliary relation of the previous iteration,

generating second tuples on each iteration by matching destination elements of the new first tuples with source elements of tuples in F of the previous iteration, and
adding the new first tuples and the new second tuples to F of a current iteration; and

providing an indication that the tuples in F of the current iteration represent the transitive closure of f.

2. The method of claim 1, further comprising:

generating evaluation predicates that include:

a first predicate that when evaluated generates the new first tuples,
a second predicate that when evaluated generates the new second tuples, and
an $F_{n+1}$ predicate that when evaluated generates a relation having tuples in $F_n$, tuples generated by the first predicate, and tuples generated by the second predicate,

wherein iteratively computing new first tuples and new second tuples comprises iteratively evaluating the evaluation predicates.

3. The method of claim 2, wherein:

the first predicate is defined by:

$$\psi_1(s,d) \text{ :- } f(s,d)$$

$$\psi_{n+1}(s,d) \text{ :- } \text{exists}(\text{ a: } \psi_n(s,a), \psi_n(a,d)), \neg F_n(s,d),$$

and the second predicate is defined by:

$$F_1(s,d) \text{ :- } f(s,\ d)$$

$$F_{n+1}(s,d) \text{ :- } F_n(s,d); \psi_{n+1}(s,d); \text{exists}(\text{ a: } \psi_{n+1}(s,a), F_n(a,d)).$$

4. The method of claim 1, further comprising:

adding the new first tuples to a new auxiliary relation for a current iteration.

5. The method of claim 1, wherein the new first tuples for an iteration n includes tuples representing $2^n$ chained uses of f.

6. The method of claim 1, wherein the second tuples for an iteration n includes tuples representing between $2^n$ and $2^{n+1}$ chained uses of f.

7. The method of claim 1, further comprising computing the transitive relation of f while generating duplicate tuples only due to branches and loops.

8. The method of claim 1, further comprising computing the transitive relation of f in $O(\log_2(lsp))$ iterations, wherein $lsp$ represents a length of a longest shortest path of tuples in F.

9. A system comprising:

one or more computers and one or more storage devices storing instructions that are operable, when executed by the one or more computers, to cause the one or more computers to perform the method of any of claims 1-8.

10. A computer program product, encoded on one or more non-transitory computer storage media, comprising instructions that when executed by one or more computers cause the one or more computers to perform the method of any of claims 1-8.

FIG. 1

FIG. 2

Receive request to compute transitive
closure of relation f — *310*

Add tuples in f to $F_1$ and tuples in f to $\psi_1$ — *320*

Generate new first tuples in $\psi_{n+1}$ by
matching destination elements of tuples in
$\psi_n$ with source elements of tuples in $\psi_n$,
and excluding any tuples in $F_n$ — *330*

New tuples
produced? — *340*

No → Provide an indication
that $F_n$ is the transitive
closure of f — *350*

Yes

Generate new second tuples by matching
destination elements of the new first
tuples in $\psi_{n+1}$ with source elements of
tuples in in $F_n$ — *360*

Add tuples in $F_n$, new first tuples, and new
second tuples to $F_{n+1}$ — *370*

FIG. 3

Europäisches Patentamt

European Patent Office

Office européen des brevets

# EUROPEAN SEARCH REPORT

Application Number

EP 16 18 6253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RICHARDSON J P ET AL: "DESIGN AND EVALUATION OF ALGORITHMS TO COMPUTE THE TRANSITIVE CLOSURE OF A DATABASE RELATION", PROCEEDINGS OF THE INTERNATIONAL CONFERENCE ON DATA ENGINEERING. LOS ANGELES, FEB. 3 - 5, 1987; [PROCEEDINGS OF THE INTERNATIONAL CONFERENCE ON DATA ENGINEERING], WASHINGTON, IEEE COMP. SOC. PRESS, US, vol. CONF. 3, February 1987 (1987-02), pages 112-119, XP000757754, * section 1 * | 1-10 | INV. G06F17/10 G06F17/30 |
| A | RAKESH AGRAWAL ET AL: "Direct transitive closure algorithms: design and performance evaluation", ACM TRANSACTIONS ON DATABASE SYSTEMS, ACM, NEW YORK, NY, US, vol. 15, no. 3, September 1990 (1990-09), pages 427-458, XP058275113, ISSN: 0362-5915, DOI: 10.1145/88636.88888 * section 1 * | 1-10 | |

TECHNICAL FIELDS SEARCHED (IPC)

G06F

The present search report has been drawn up for all claims

| Place of search | Date of completion of the search | Examiner |
|---|---|---|
| Berlin | 23 December 2016 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)